# EUROPEAN PATENT APPLICATION

(11) **EP 4 008 766 A1**
(43) Date of publication of application: **08.06.2022**
(21) Application number: 20849141.5
(22) Date of filing: 29.07.2020
(51) Int. Cl.: C12C 5/02, C12P 1/04, A23L 27/21, A23L 27/22, A23L 27/24, A23L 2/00, A23L 2/38, A23L 2/52, C12G 3/04

(54) **FOOD AND BEVERAGE COMPOSITION**

(30) Priority: 02.08.2019 JP 2019143375
(71) Applicant: Suntory Holdings Limited, Osaka 530-8203 (JP)
(72) Inventor: SAWADA, Miho, Shimamoto-gun, Osaka (JP); TAKII, Shinya, Kyoto-shi, Kyoto (JP); SHIMMURA, Anna, Mishima-gun, Osaka (JP)
(74) Representative: Vossius & Partner Patentanwälte Rechtsanwälte mbB
(86) International application number: PCT/JP2020/029017
(87) International publication number: WO 2021/024875

(57) **Abstract**

A composition for foodstuff, wherein a total content of D-aspartic acid and D-glutamic acid per Brix (°) ((mg/L) / Brix) is 30 or more. The composition of the present invention is useful in the fields of foodstuff, and the like.

## Description

### TECHNICAL FIELD

The present invention relates to a composition for foodstuff.

### BACKGROUND ART

With the diversification of the inclinations of the consumers in the recent years, the development of beer-taste beverages having various flavor characteristics has been desired. For example, Patent Publication 1 discloses the use of a fermentation rice extract for providing a nonfermented beer-taste nonalcoholic beverage having excellent full-bodied taste and sharp taste, and inclinations, and having a low purine content.

In addition, various seasonings have been proposed for the purposes of improving the tastes of the foodstuff. For example, Patent Publication 2 discloses the use of a mixture of D-alanine, D-aspartic acid, D-glutamic acid, and D-proline, for improving richness of the foodstuff, improving sustainability, and improving taste of stewing (slow cooking).

### RELATED ART REFERENCES

### PATENT PUBLICATIONS

Patent Publication 1: Japanese Patent Gazette No. 6042490
Patent Publication 2: Japanese Patent Gazette No. 6449418

### SUMMARY OF THE INVENTION

### PROBLEMS TO BE SOLVED BY THE INVENTION

However, it could be seen that when the fermentation rice extract of Patent Publication 1 or the mixture of D-amino acids is used in a beer-taste beverage, the sharpness may be undesirably worsened.

The present invention relates to the provision of a composition for foodstuff capable of giving sharpness to a beer-taste beverage.

### MEANS TO SOLVE THE PROBLEMS

The present invention relates to a composition for foodstuff, wherein a total content of D-aspartic acid and D-glutamic acid per Brix (°) ((mg/L) / Brix) is 30 or more.

### EFFECTS OF THE INVENTION

According to the present invention, a composition for foodstuff capable of giving sharpness to a beer-taste beverage can be provided.

### MODES FOR CARRYING OUT THE INVENTION

In general, in the beer-taste beverages, when the sharpness is high, the inclination degree of the customers is improved. The present inventors have newly found that compositions containing D-aspartic acid and D-glutamic acid in certain amounts or higher and having Brix of a certain level or lower contribute to the sharpness of beer-taste beverages. Although the mechanisms therefor are not ascertained, it is assumed to be as follows. Compositions containing D-aspartic acid and D-glutamic acid having the effects of giving tuning to tastes of foodstuff thereby improving sharpness, and containing little of other ingredients which can be an uncomfortable taste, in other words, compositions having a low Brix, contribute to the sharpness of the beverage. Although the improvements in tastes have been reported by the inclusion of D-aspartic acid and D-glutamic acid in the same manner in Patent Publication 2, those that are specifically disclosed in this publication are mildening an uncomfortable taste in foods that are rich in taste such as curry and do not necessitate sharpness, so that the effects regarding sharpness cannot be expected therefrom. The term "sharpness" as used herein refers to a refreshing taste and a stimulating taste with a light taste at the back of the throat with little lingering aftertaste of sweetness or sweet aroma. The term "beer-taste beverage" as used herein refers to a carbonated beverage having a beerlike flavor. In other words, the beer-taste beverage of the present specification embraces all the carbonated beverages having a beer flavor, unless specified otherwise. The composition for foodstuff of the present invention can be used in beer-taste beverages in general, which can be suitably used also in beverages with light tastes, such as alcoholic beer-taste beverages having a low malt ratio, or low malt-derived ingredient, raw wort extract, real extract, purine content, or alcoholicity, and nonalcoholic beer-taste beverages similarly having a low malt ratio, or low malt-derived ingredient, raw wort extract, real extract, or purine content. Among them, the nonalcoholic beer-taste beverage embraces any of the nonalcoholic carbonated beverages having a beer flavor, irrespective of the presence or absence of a fermentation step with an yeast, unless specified otherwise. In addition, the term "malt ratio" refers to a ratio of the mass of malts occupied in the raw materials other than water and hops, such as malts, rice, maize, great millet, potatoes, starch, and wheat other than malts, and sugars. Here, the ingredient which can be added in a very small amount such as an acidulant, a sweetener, a bittering agent, a seasoning, or a flavor is not included in the calculation of the above ratio. The malt ratio as used herein means a value as calculated in accordance with the Notice of Interpretations of Liquor Taxation Laws and Liquor Governmental Ordinance or the like enforced on April 1, 2018. In general, the raw wort extract has the technical idea of expressing the richness of beers calculated from two parameters: alcohols and extracts (Ingredients of Brewed Products, page 184, edited and published by the Brewing Society of Japan, the Public Interest Incorporated). The raw wort extract is said to be an estimated value of a wort concentration used during the brewery of beer (when a sugar is added, including a sugar concentration). The raw wort extract can be measured in accordance with the SCABA (Servo Chem Automatic Beer Analyzer) method that is officially evaluated as the international laws. In the present invention, the "real extract (°P)" means a mass concentration of nonvolatile solid materials contained in the beverage, which can be measured in accordance with the BCOJ Beer Analytical Method, 8.4.3 Alcolyzer method.

The composition for foodstuff of the present invention contains D-aspartic acid and/or D-glutamic acid. The total content of D-aspartic acid and D-glutamic acid per Brix (°), (mg/L) / Brix, in the composition for foodstuff of the present invention is 30 or more, preferably 50 or more, and more preferably 60 or more, from the viewpoint of making sharpness excellent, and the total content is preferably 240 or less, more preferably 200 or less, and even more preferably 180 or less, from the viewpoint of inhibiting the generation of bitterness, and the total content may be within the range of any combinations thereof. The Brix and the contents of the amino acids as used herein are measured in accordance with the methods described in Examples set forth below.

The content of D-aspartic acid in the composition for foodstuff of the present invention is preferably 140 mg/L or more, more preferably 145 mg/L or more, and even more preferably 150 mg/L or more, from the viewpoint of making sharpness excellent, and the content is preferably 600 mg/L or less, more preferably 500 mg/L or less, and even more preferably 450 mg/L or less, from the viewpoint of inhibiting the generation of bitterness, and the content may be within the range of any combinations thereof.

The content of D-glutamic acid in the composition for foodstuff of the present invention is preferably 20 mg/L or more, more preferably 25 mg/L or more, and even more preferably 30 mg/L or more, from the viewpoint of making sharpness excellent, and the content is preferably 150 mg/L or less, more preferably 100 mg/L or less, and even more preferably 90 mg/L or less, from the viewpoint of inhibiting the generation of bitterness, and the content may be within the range of any combinations thereof.

The total content of D-aspartic acid and D-glutamic acid in the composition for foodstuff of the present invention is preferably 170 mg/L or more, more preferably 180 mg/L or more, and even more preferably 190mg/L or more, from the viewpoint of making sharpness excellent, and the content is preferably 700 mg/L or less, more preferably 600 mg/L or less, and even more preferably 570 mg/L or less, from the viewpoint of inhibiting the generation of bitterness, and the content may be within the range of any combinations thereof. In addition, the ratio of the content of D-aspartic acid to the content of D-glutamic acid (D-aspartic acid : D-glutamic acid) includes, but not particularly limited to, for example, 10:1, 8:1, 6:1, 4:1, 2:1, 1:1, 1:2, 1:4, 1:6, 1:8, 1:10, and the like, and the ratio may be within the range of any combinations thereof. In the embodiment of the lactic acid fermented extract described later, it is preferable that the lactic acid fermented extract has a ratio of from 6:1 to 4:1.

The Brix (°) in the composition for foodstuff of the present invention is not limited so long as the above ratio is satisfied, and the Brix is preferably from 1° to 10°, and more preferably from 2° to 5°, and the upper limit can be, but not particularly limited to, for example, 80° or less when concentration, purification or the like is carried out.

The composition for foodstuff of the present invention may further contain L-aspartic acid, but it is preferable that its amount is a small amount from the viewpoint of making sharpness excellent. The content of L-aspartic acid in the composition for foodstuff of the present invention is preferably 1000 mg/L or less, more preferably 700 mg/L or less, and even more preferably 500 mg/L or less, from the viewpoint of making sharpness excellent, and the lower limit thereof can be, but not particularly limited to, for example, 0.01 mg/L or more, and the content may be within the range of any combinations thereof.

The composition for foodstuff of the present invention may further contain L-glutamic acid, but it is preferable that its amount is a small amount from the viewpoint of making sharpness excellent. The content of L-glutamic acid in the composition for foodstuff of the present invention is preferably 1000 mg/L or less, more preferably 800 mg/L or less, and even more preferably 700 mg/L or less, from the viewpoint of making sharpness excellent, and the lower limit thereof can be, but not particularly limited to, for example, 0.01 mg/L or more, and the content may be within the range of any combinations thereof.

The total content of L-aspartic acid and L-glutamic acid in the composition for foodstuff of the present invention is preferably 2000 mg/L or less, more preferably 1500 mg/L or less, and even more preferably 1200 mg/L or less, from the viewpoint of making sharpness excellent, and the lower limit thereof can be, but not particularly limited to, for example, 0.01 mg/L or more, and the total content may be within the range of any combinations thereof.

The total content of D-aspartic acid and D-glutamic acid, based on 100 parts by mass of a total content of L-aspartic acid and L-glutamic acid in the composition for foodstuff of the present invention is preferably 5 parts by mass or more, more preferably 10 parts by mass or more, and even more preferably 15 parts by mass or more, from the viewpoint of making sharpness excellent, and the upper limit thereof can be, but not particularly limited to, for example, 10000 parts by mass or less, and the total content may be within the range of any combinations thereof.

The total content of D-aspartic acid and D-glutamic acid, based on 100 parts by mass of L-glutamic acid in the composition for foodstuff of the present invention is preferably 15 parts by mass or more, more preferably 20 parts by mass or more, and even more preferably 25 parts by mass or more, from the viewpoint of making sharpness excellent, and the upper limit thereof can be, but not particularly limited to, for example, 10000 parts by mass or less, and the total content may be within the range of any combinations thereof.

The composition for foodstuff of the present invention can optionally contain ingredients such as carbon source raw materials (sugars), nitrogen source raw materials (peptides, amino acids), vitamins, or flavor ingredients.

The composition for foodstuff of the present invention can be used for various foodstuff such as beer-taste beverages, refreshing beverages, alcoholic beverages, green-tea beverages, and sports beverages. In particular, the composition can be suitably used in the applications of giving sharpness to beer-taste beverages. Use embodiments in these beverages will be exemplified hereinbelow.

As to the beer-taste alcoholic beverage produced using malts as raw materials, first, to a mixture containing raw materials such as wheat such as malts, optionally other grains, starches, sugars, and a bittering agent, or a colorant, and water is added an enzyme such as amylase optionally to carry out gelatinization or saccharification, and the mixture is then filtered, to provide a saccharified liquid. Hops, a bittering agent or the like is optionally added to the saccharified liquid, and a mixture is boiled, to remove solid contents such as coagulated proteins in a clearing tank. As a substitute for this saccharified liquid, hops may be added to a hot water added with a malt extract, and the mixture may be boiled. The hops may be mixed at any stage from the beginning of boiling to before the termination of boiling. As the conditions in the saccharification step, the boiling step, the solid content removal step, and the like, known conditions may be used. As the conditions in the fermentation and storage (stored liquor) steps, known conditions may be used. The fermentation liquid obtained is filtered, and a carbon dioxide gas is added to a filtrate obtained. Thereafter, a vessel is filled, and subjected to a sterilizing step, to obtain an intended beer-taste alcoholic beverage. The composition for foodstuff of the present invention in each of the above steps may be added at any steps up to filling, and it is preferable that the composition is mixed in the boiling step, from the viewpoint of microbial quality guarantee.

As to the beer-taste alcoholic beverage produced without using malts as raw materials, a liquid sugar containing a carbon source, a nitrogen source as an amino acid-containing material other than wheat or malts, hops, a pigment, and the like are mixed together with a hot water, to provide a liquid sugar-containing solution. The liquid sugar-containing solution is boiled. When hops are used as raw materials, the hops may be mixed with the liquid sugar-containing solution during boiling, not before the beginning of boiling. As a substitute for this saccharified liquid, hops may be added to a hot water added with an extract using raw materials other than malts, and a mixture may be boiled. The hops may be mixed at any stage from the beginning of boiling to before the termination of boiling. As the conditions in the fermentation and storage (stored liquor) steps, known conditions may be used. The fermentation liquid obtained is filtered, and a carbon dioxide gas is added to a filtrate obtained. Thereafter, a vessel is filled, and subjected to a sterilizing step, to obtain an intended beer-taste alcoholic beverage. In each of the above steps, the composition for foodstuff of the present invention may be added at any steps up to filling, and it is preferable that the composition is mixed in the boiling step, from the viewpoint of microbial quality guarantee.

The amount of the composition for foodstuff of the present invention in the production steps for the beer-taste alcoholic beverage differs depending upon the kinds of the beer-taste alcoholic beverages. In the beer-taste alcoholic beverage with a lighter taste, the composition can be added so that a total content of D-aspartic acid and D-glutamic acid is in an amount of preferably from 1.2 to 2.2 mg/L, more preferably from 1.4 to 2.0 mg/L, and even more preferably from 1.6 to 1.8 mg/L as a measure.

As to the nonalcoholic beer-taste beverage produced by using malts as raw materials, first, to a mixture containing raw materials such as wheat such as malts, optionally other grains, starches, sugars, a bittering agent, or a colorant, and water is added an enzyme such as amylase optionally to carry out gelatinization or saccharification, and the mixture is then filtered, to provide a saccharified liquid. Hops, a bittering agent or the like is optionally added to the saccharified liquid, and a mixture is boiled, to remove solid contents such as coagulated proteins in a clearing tank. As a substitute for this saccharified liquid, hops may be added to a hot water added with a malt extract, and a mixture may be boiled. The hops may be mixed at any stage from the beginning of boiling to before the termination of boiling. As the conditions in the saccharification step, the boiling step, the solid content removal step, and the like, known conditions may be used. After boiling, the wort obtained is filtered, and a carbon dioxide gas is added to a filtrate obtained. Thereafter, a vessel is filled, and subjected to a sterilizing step, to obtain an intended nonalcoholic beer-taste beverage. In each of the above steps, the composition for foodstuff of the present invention may be added at any steps up to filling, and it is preferable that the composition is mixed in the boiling step, from the viewpoint of microbial quality guarantee.

In the case of producing a nonalcoholic beer-taste beverage without using malts as raw materials, first, a liquid sugar containing a carbon source, a nitrogen source as an amino acid-containing material other than wheat or malts, hops, a pigment, and the like are mixed together with a hot water, to provide a liquid sugar-containing solution. The liquid sugar-containing solution is boiled. When hops are used as raw materials, the hops may be mixed with the liquid sugar-containing solution during boiling, not before the beginning of boiling. A carbon dioxide gas is added to the liquid sugar-containing solution after boiling. Thereafter, a vessel is filled, and subjected to a sterilizing step, to obtain an intended nonalcoholic beer-taste beverage. In each of the above steps, the composition for foodstuff of the present invention may be added at any steps up to filling, and it is preferable that the composition is mixed in the boiling step, from the viewpoint of microbial quality guarantee.

As the amount of the composition for foodstuff of the present invention in the production steps for the nonalcoholic beer-taste beverage, the composition can be added so that a total content of D-aspartic acid and D-glutamic acid is in an amount of preferably from 0.3 to 1.5 mg/L, more preferably from 0.5 to 1.5 mg/L, and even more preferably from 0.8 to 1.0 mg/L as a measure.

The composition for foodstuff of the present invention can be preferably exemplified by lactic acid fermented extracts and processed products thereof. These embodiments will be explained hereinbelow without intending to limit the present invention to these embodiments.

The lactic acid fermented extract includes lactic acid fermented extracts in which malt extracts, rice extracts, barley extracts, cornstarch, and the like are subjected to lactic acid fermentation. From the viewpoint of fermentation ability and tastes, an embodiment of the lactic acid fermented extract in which malt extracts are subjected to lactic acid fermentation is preferred. In this embodiment, the malt extract can be prepared by subjecting malts to a series of steps of pulverization, saccharification, filtration, boiling, and filtration, or a commercially available product such as Malt Ace 20 manufactured by ORIENTAL YEAST CO., LTD. can also be used. The lactic acid bacteria used in the preparation of the lactic acid fermented extract include *Lb. fermentum, Lb. reuteri,* and the like. An embodiment of using *Lb. fermentum* is preferred, from the viewpoint of the production ability of D-aspartic acid and D-glutamic acid. As the culture conditions, it is preferable that general conditions for lactic acid bacteria culture are applied. The culture is carried out at a temperature within the range in which the lactic acid bacteria are capable of growing, specifically from 30° to 45°C. The culture is carried out at a pH of from 3.0 to 8.0, and a pH of preferably from 3.5 to 7.0. The culture time differs depending upon the kinds of the medium used and the kinds of the substrates, and the culture time is usually from 10 to 24 hours or so, preferably cultured for overnight or longer. After the culture, the culture medium obtained is subjected to a well-known means ordinarily used in the art, for example, the procedures such as membrane filtration or centrifugation to remove an insoluble solid ingredient, irrespective of the presence or absence of the sterilizing step, to give a lactic acid fermented extract. The adjustment of the Brix can be carried out by properly adjusting the blending amount of the malt extracts.

The processed products of the lactic acid fermented extract include concentrates, dilutions, lyophilized products, concentrated dried products, purified products subjected to fractionation or purification treatment, and the like of the lactic acid fermented extract.

### EXAMPLES

The present invention will be specifically described hereinbelow by the Examples, without intending to limit the scope of the present invention to the following Examples.

### Example 1

Malt extracts were fermented with a specified lactic acid bacterium, to give a lactic acid fermented extract. Specifically, 2.5 g of malt extracts "Malt Ace 20" manufactured by ORIENTAL YEAST CO., LTD., 0.1 g of L-aspartic acid, 0.1 g of L-glutamic acid, and 96.3 g of water were mixed, and the mixture was sterilized in a water bath at 90°C for 1 minute, and then cooled to a culture temperature for the lactic acid bacteria. Brix of the cooled raw material mixture as adjusted to 3 or so, 1 g of a suspension of 1 × 10⁸ (cfu/g) commercially available lactic acid bacteria *Lb. fermentum* was inoculated to the cooled raw material mixture, and the incubation was carried out under general culture conditions for the lactic acid bacteria, to carry out lactic acid fermentation. A liquid mixture after the lactic acid fermentation was centrifuged to remove insoluble solid ingredients, and Brix was further adjusted to 3 ± 0.2, to give a composition for foodstuff of Example 1 (Lactic acid fermented extract 1).

### Example 2

The same procedures as in Example 1 were carried out except that the suspension of 1 × 10⁸ (cfu/g) lactic acid bacteria *Lb. fermentum* was replaced with 1 × 10⁸ (cfu/g) of a commercially available lactic acid bacterium *Lb. reuteri,* to give a composition for foodstuff of Example 2 (Lactic acid fermented extract 2).

### Comparative Example 1

The same procedures as in Example 1 were carried out except that the suspension of 1 × 10⁸ (cfu/g) lactic acid bacteria *Lb. fermentum* was replaced with 1 × 10⁸ (cfu/g) of a commercially available lactic acid bacterium *Lb. plantarum,* to give a composition for foodstuff of Comparative Example 1 (Lactic acid fermented extract 3).

### Example 3

The same procedures as in Example 1 were carried out except that the suspension of 1 × 10⁸ (cfu/g) lactic acid bacteria *Lb. fermentum* was replaced with water, that further D-aspartic acid was added in an amount of 0.016 g, and D-glutamic acid was added in an amount of 0.003 g, to give a composition for foodstuff of Example 3 (Unfermented extract).

### Comparative Example 2

The same procedures as in Example 1 were carried out except that the blending amount of the malt extracts was changed from 2.5 g to 15 g, that the blending amount of water was changed from 96.3 g to 83.8 g, that the Brix of the cooled raw material mixture was adjusted to 12 or so, and that the Brix after the removal of insoluble solid ingredients was adjusted to 12 ± 0.2, to give a composition for foodstuff of Comparative Example 2 (Lactic acid fermented extract 4).

The quantification of the amino acids in the extracts of each of Examples and Comparative Examples was carried out in accordance with amino acid quantification analysis using orthophthalaldehyde N-acetyl-N-cysteine chiral derivatizing method (OPA-NAC chiral derivatizing method).

First, methanol was added to the extracts in each of Examples and Comparative Examples in a two-fold amount, with stirring, and the mixture was centrifuged to obtain the supernatant. The supernatant obtained was diluted three times with distilled water, and the dilution was used as a sample for chiral derivatization. Here, in accordance with the amounts of the amino acids contained in the fermented product, the supernatant which was directly used or diluted 2 to 5 times with distilled water can be used as a sample for chiral derivatization.

To 60 µl of the sample for chiral derivatization were added 40 µl of a 1% aqueous sodium tetraborate solution, 20 µl of a 1% aqueous N-acetyl-L-cysteine solution, and 20 µl of 1.6% ortho-phthalaldehyde methanol solution. The mixture was filtered with a 0.45 µm membrane filter made of cellulose acetate manufactured by ADVANTECH, and the filtrate was used as a chiral derivatization treatment solution. Using the chiral derivatization treatment solution as an analytical sample, the amino acid analysis was carried out in accordance with high-performance chromatography (HPLC), manufactured by Shimadzu Corporation, a detection limit; 0.5 ppm. In addition, during the amino acid analysis in accordance with the HPLC using the chiral derivatization treatment solution as an analytical sample, as the conditions for analysis, the conditions as listed in the following Table 1 were selected. The results are shown in Table 2.

### [Table 1]

**Table 1**

| Conditions for HPLC analysis | |
|---|---|
| Detector | SPD-M20A |
| Detected wavelength | 338nm |
| Column | YMC-Pack ODS-A column (length 150 mm × inner diameter 4.6 mm), manufactured by YMC |
| Column temperature | 40°C |
| Mobile phase | A: 50 mM acetate buffer, pH 5.9 |
| | B: methanol |
| Flow rate | 1.0 ml/min |

The Brix of the extracts of each of Examples and Comparative Examples was measured with a digital sugar refractometer RX-5000α, ATAGO CO., LTD.). The results are shown in Table 2.

### [Table 2]

**Table 2**

| | Bacterial strain or the like | D-Asp, mg/L | L-Asp, mg/L | D-Glu, mg/L | L-Glu, mg/L | Brix, ° | D-Asp+ D-Glu)/Brix, (mg/L)/Brix |
|---|---|---|---|---|---|---|---|
| Ex. 1 | *Lb. fermentum* | 157 | 467 | 33 | 650 | 2.8 | 67.8 |
| Ex. 2 | *Lb. reuteri* | 55 | 737 | 71 | 701 | 3.0 | 42 |
| Comp. Ex. 1 | *Lb. plantarum* | 2 | 828 | 9 | 848 | 3.2 | 3.4 |
| Ex. 3 | Unfermented + D-amino acids added | 160 | 776 | 30 | 897 | 3.2 | 59.4 |
| Comp. Ex. 2 | *Lb. fermentum* | 130 | 592 | 40 | 704 | 12.2 | 13.9 |

The extract of each of Examples and Comparative Examples was added in an amount of 0.3 parts by mass to 100 parts by mass of a commercially available alcoholic beer-taste beverage, or each in an amount of 0.5 parts by mass to 100 parts by mass of a commercially available beer-taste alcoholic beverage having a malt ratio of from 10 to 35%. The sharpness was evaluated on the bases of the following evaluation criteria. Defining the evaluation of the beverage before addition of the extract as "△," i.e. the evaluation of blank being "△,"the relative evaluation based on blank 1 was made in Table 3, and the relative evaluation based on blank 2 was made in Table 4. When the evaluations were "○" or higher, it can be seen that the sharpness is improved. The results are shown in Tables 3 and 4.

### (Evaluations for Sharpness)

⊚: strong sharpness is tasted;
○: sharpness is slightly tasted;
△: sharpness is faintly tasted (equivalent to the blank); and
X: sharpness is not tasted.

### [Table 3]

**Table 3**

| Blank 1: Nonalcoholic beer-taste beverage | | | | | | |
|---|---|---|---|---|---|---|
| Evaluation test zone | Blank 1 | Ex. 1 | Ex. 2 | Comp. Ex. 1 | Ex. 3 | Comp. Ex. 2 |
| Evaluation of sharpness | Δ | o | ○ | × | ⊚ | × |

### [Table 4]

**Table 4**

| Blank 2: Beer-taste alcoholic beverage (malt ratio: 10 to 35% by mass) | | | | | | |
|---|---|---|---|---|---|---|
| Evaluation test zone | Blank 2 | Ex. 1 | Ex. 2 | Comp. Ex. 1 | Ex. 3 | Comp. Ex. 2 |
| Evaluation of sharpness | Δ | ⊚ | ○ | × | ⊚ | × |

It can be seen from Tables 3 and 4 that when each of the compositions for food stuff of Examples 1 to 3 in which the total content of D-aspartic acid and D-glutamic acid per Brix (°), (mg/L)/Brix, is 30 or more, was added to a nonalcoholic beer-taste beverage or a beer-taste alcoholic beverage having a low malt ratio, the sharpness of the beverage is improved. Here, even when added to a beer having a malt ratio of 100% by mass, the improved effects in sharpness could be confirmed, but the improved effects in the nonalcoholic beer-taste beverages and the beer-taste alcoholic beverages having a low malt ratio were more excellent.

### INDUSTRIAL APPLICABILITY

The composition of the present invention is useful in the fields of foodstuff, and the like.

## Claims

1. A composition for foodstuff, wherein a total content of D-aspartic acid and D-glutamic acid per Brix (°) ((mg/L) / Brix) is 30 or more.

2. The composition for foodstuff according to claim 1, wherein the content of D-aspartic acid is 140 mg/L or more.

3. The composition for foodstuff according to claim 1 or 2, wherein the content of L-aspartic acid is 1000 mg/L or less.

4. The composition for foodstuff according to any one of claims 1 to 3, wherein a total content of D-aspartic acid and D-glutamic acid is 170 mg/L or more.

5. The composition for foodstuff according to any one of claims 1 to 4, wherein a total content of L-aspartic acid and L-glutamic acid is 2000 mg/L or less.

6. The composition for foodstuff according to any one of claims 1 to 5, wherein a total content of D-aspartic acid and D-glutamic acid based on 100 parts by mass of a total content of L-aspartic acid and L-glutamic acid is 5 parts by mass or more.

7. The composition for foodstuff according to any one of claims 1 to 6, wherein a total content of D-aspartic acid and D-glutamic acid based on 100 parts by mass of the content of L-glutamic acid is 15 parts by mass or more.

8. The composition for foodstuff according to any one of claims 1 to 7, wherein a total content of D-aspartic acid and D-glutamic acid per Brix (°) ((mg/L) / Brix) is 50 or more.

9. The composition for foodstuff according to any one of claims 1 to 8, which is a lactic acid fermented extract or a processed product thereof.

10. The composition for foodstuff according to claim 9, wherein the raw materials for the lactic acid fermented extract is a malt extract.

11. The composition for foodstuff according to claim 9 or 10, wherein the lactic acid fermented extract is obtained by a method comprising fermenting a malt extract with *Lb. fermentum.*

12. The composition for foodstuff according to any one of claims 1 to 11, for use in giving sharpness to a beverage.
